# EUROPEAN PATENT SPECIFICATION

(11) **EP 0 430 578 B1**
(45) Date of publication and mention of the grant of the patent: **13.03.1996**
(21) Application number: 90312707.4
(22) Date of filing: 20.11.1990
(51) Int. Cl.: H04M 15/00, H04M 19/00

(54) **Telephone interface circuit**
Fernsprechschnittstellenschaltung
Circuit d'interface pour téléphone

(30) Priority: 20.11.1989 IT 2244989
(43) Date of publication of application: 05.06.1991
(73) Proprietor: SGS-THOMSON MICROELECTRONICS S.r.l., I-20041 Agrate Brianza (Milano) (IT)
(72) Inventor: Siligoni, Marco, I-20010 Vittuone (IT); Saviotti, Vanni, I-20052 Monza (IT)
(74) Representative: Robinson, John Stuart

(56) References cited:
- EP-A- 0 021 509
- EP-A- 0 206 279
- EP-A- 0 209 716
- IEEE JOURNAL OF SOLID-STATE CIRCUITS vol. SC-18, no. 6, December 1983, NEW YORK, USA pages 665 - 677; RAMESH ET AL.: ' Integrated Electronic Subscriber Line Interface Circuit with Ringing on Chip'

## Description

This invention relates to interface circuits and devices for use between a subscriber telephone line and a telephone exchange, for instance for sending a control signal to any subscriber charging indication equipment along the telephone line.

A subscriber telephone line is powered by a direct voltage generator in series with which other voltage signal generators, for instance for speech band conversation signals, ringing signals and signals to indicate subscriber charging, are connected. Telephone interface devices, including those with integrated circuits, must therefore power the subscriber's telephone line and supply the necessary signals to it at the same time.

The units of the user's telephone equipment, which may include a progressive metering indicator for charging related to the telephone connection currently made (metering being calculated by the appropriate units in the exchange) are connected in parallel with each other to the subscriber's terminals of the subscriber's telephone line.

The exchange's units control the subscriber's charging indicators via an interface device and the same subscriber's telephone line by means of suitable control signals normally called "charging signals". These control signals must have a high amplitude in comparison with the maximum amplitude of the conversation signals and cannot be provided by means of signals having a pulsed waveform because the rising and falling edges of the pulses would give rise to harmonics which would not only disturb the user of the line, but also the users of adjacent lines. In practice, alternating voltage signals having a limited duration (approximately 100 msec) and a frequency (12 or 16 KHZ) very much greater than that of conversation telephone signals (0.3 - 3.4 KHz), with relatively long signal rise and fall times, are used.

In general the exchange's units provide the interface device with a voltage signal of the alternating type which has a predetermined amplitude and frequency which are constant over time. This voltage signal is suitably modulated by circuits within the device in order to "shape" the charging signals.

Italian patent applications No. 21270 A/84 and No. 21550 A/84 by the same applicant disclose telephone circuits which generate control signals for subscriber charging indicators and which are capable of being included in interface devices. However, in some cases, the charging signals may be generated directly in the exchange and transmitted to the subscriber's telephone line via the interface device connected to it.

As mentioned hereinbefore, the level and frequency of the charging signals are very much higher than the level and frequency of the conversation signals. Thus, particularly in integrated circuit interface devices, it is necessary to solve the problem of the possible transmission of these charging signals, which are not sufficiently attenuated, to the user who has received the call and who should not therefore normally be charged.

The two-to-four wire conversation circuit (between the two-wire line and the exchange channels) which is included in modern interface devices requires accurately balanced impedances, optimised only for the frequency band of the conversation signals, so that it can decouple received signals from transmission signals absolutely.

It does not therefore prevent the transmission of even attenuated charging signals to the incorrect subscriber.

A technique which is currently used to solve the problem (as disclosed in EP-A-0 021 509) consists of filtering the signals sent via the conversation circuit to the transmission channel of the exchange using a low pass filter or narrow band filter. The filter is designed so that the total attenuation of the entire transmission "chain" to the subscriber who is not being charged is such as to prevent the activation of any charging indicator which that subscriber may have.

In the context of integrated circuit interface devices comprising a closed ring system with a negative response for generation of the impedance which matches the conversation signals to the subscriber's line, the automatic control of their level on the line and the input of signals to the transmission channel, it is instead preferred to place the low pass or narrow band filter in the reaction path, in particular in the impedance generating circuit. Using this technique, the level of the charging signals on the line is automatically controlled at the same time as the charging signals returning to the transmission channel are attenuated. In addition to this, the level of the signals on the line is independent of the line's impedance, as well as the impedance of the residual signals returning along the transmission channel.

Both of the known techniques described hereinbefore are capable of solving the problem of residual charging signals on the transmission channel, but they involve non-negligible costs in the design and construction of the most appropriate filters.

According to the invention, there is provided a circuit as defined in the appended Claim 1.

A preferred embodiment of the invention is defined in the appended Claim 2.

It is thus possible to provide interface means between exchange units and a subscriber's telephone line which is capable of sending control signals to the subscriber's charging indicators along the line itself, in which the problem of residual charging signals returning along the transmission channel is resolved in a simple and economic manner in comparison with the known art.

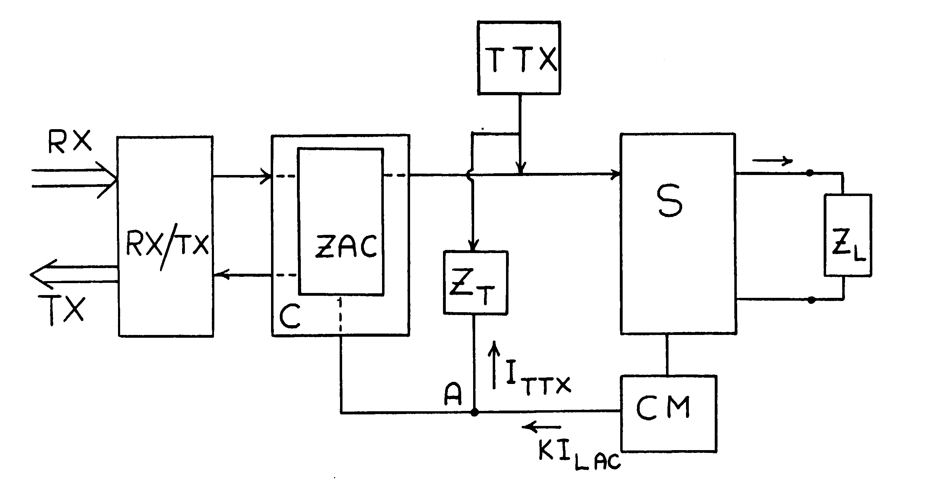

The invention will be further described, by way of example, with reference to the accompanying drawing, which is a block diagram of an interface device constituting an embodiment of the invention.

An interface device comprises a reception and transmission circuit shown in the drawing by a block RX/TX having at least one first and one second input terminal and at least one first and one second output terminal. The connections, which may have one or two terminals depending on whether the transmitted signals are current or voltage signals, are indicated symbolically in the figure by arrows, while the connections without any arrow can be used only for current signals.

The first input terminal RX and the first output terminal TX of the reception and transmission circuit are connected to the reception and transmission channels, respectively, of the telephone exchange which are separate from each other and therefore require a "two-to-four wire conversion circuit" in the interface device so that the subscriber's two wire line can be connected. The conversion circuit is included in the reception and transmission circuit RX/TX, but it is not expressly indicated in the drawing. The RX and TX terminals are represented by bolder arrows to indicate that they are used for connection to the four wire channels of the exchange.

The interface device also includes a signal generating circuit C which has at least one first and one second input terminal and at least one first and one second output terminal. The interface device further includes a circuit S for generating and inputting signals to the line, having at least one input terminal and a first output terminal and also having two terminals for connection to the subscriber's telephone line, represented symbolically in the figure by a single block Z_{L}. The first input terminal and the first output terminal of signal generating circuit C are connected to the second output terminal and the second input terminal, respectively, of the reception and transmission circuit RX/TX. The second output terminal of the signal generating circuit C is connected to the input terminal of the signal generating and inputting circuit S.

The signal generating circuit C comprises an impedance generating circuit ZAC for matching of the telephone signals to the subscriber's telephone line, this impedance generating circuit being connected in the signal path in the signal generating circuit.

Current mirroring circuit means CM, which are connected to the subscriber's telephone line via the signal generating and inputting circuit S and a point in the path of the signals of the signal generating circuit C via the impedance generating circuit ZAC, are placed between the first output terminal of circuit S for inputting signals and powering of the line. The current mirroring circuit means CM provide the signal generating circuit C, as a counter response, with a current KI_{LAC} which is proportional to the component of signal I_{LAC} of the instantaneous line current I_{L} according to a predetermined proportionality ratio K. This current KI_{LAC} is normally used, in accordance with known techniques applied to known interface telephone devices known as SLIC ("subscriber line integrated circuits"), in order to generate the line matching impedance, to effect automatic control of the line signal level and mainly to transmit the signals originating from the subscriber's telephone equipment to the conversion circuit of the reception and transmission circuit RX/TX and then to the exchange's transmission channel.

The interface device comprises a source TTX of control signals for charging indication equipment which can be connected to a subscriber's telephone line. The charging signal source may be one of the known generators incorporated in the interface device as mentioned in the earlier patent applications referred to hereinbefore, but may also be a simple circuit means providing a coupling to the exchange's units when the charging signals are generated directly within the exchange and connected to the first input terminal of the circuit S which powers and inputs signals to the line, the circuit which in fact also sends the charging signals to the line.

The charging signal source TTX is connected to the second input terminal of signal generating circuit C by means of circuit means Z_{T} which offers charging signal source TTX an impedance which is proportional to the line impedance, substantially in accordance with the predetermined proportionality ratio K. The current which flows from the circuit means Z_{T} to the second input terminal of the signal generating circuit C, in proportion to the charging signals, is in the opposite direction to the current which flows to the second input terminal from the current mirroring circuit means CM.

In general the proportionality factor K is less than unity because, in modern integrated circuit interface devices, there is a tendency to reduce the level of the currents which flow in the parts of the circuit which generate signals.

An example of a possible embodiment of the current mirroring circuit means CM is illustrated in Italian patent no. 19983 A/85 by the same applicant.

The circuit means Z_{T} which provides an impedance proportional to the line impedance to the charging signal source TTX consists, in a preferred embodiment of the invention, merely of a resistance and a capacitance in series with each other. These components are selected so as to provide the desired impedance proportional to the line impedance.

The charging signals thus give rise to a voltage at the terminals of this series connection which causes a current I_{TTX}, equal to the component of the current supplied by the circuit means CM proportional to the component of the line signal current due to the input of the charging signals to it, to flow therein. The charging signals are applied to the resistance and capacitance connected in series in such a way that the current I_{TTX} generated has the opposite direction in the circuit to that of the current KI_{LAC} provided by the circuit means CM with respect to node A. At node A, therefore, the currents due to the charging signals cancel out and there is therefore no return of residual charging signals from the subscriber's telephone line to the transmission channel towards the subscriber who is not being charged.

An advantage of this arrangement is that, by means of a simple operation of "summing" the currents, the residual charging signals are cancelled, while at the same time ensuring control of the line signal level, without the need for any signal filtering operation, which would involve greater design and construction costs, particularly if integrated circuits were used.

It is important to note that laboratory tests have demonstrated that sufficient attenuation of the returning charging signals on the transmission channel is obtained in all circumstances even when the impedance used is not precisely proportional to the effective impedance of the subscriber's line, although it is proportional to a "mean" line impedance which lies between those which are likely for connections to the exchange.

Although only one example of an embodiment of the invention has been illustrated and described, various modifications may be made within the scope of the invention. For example, the circuit means Z_{T} may consist of a resistance and capacitance in parallel with each other instead of in series.

## Claims

1. A telephone interface circuit for use between a subscriber telephone line and control units in a telephone exchange, comprising: a reception and transmission circuit (RX/TX) having at least one first and one second input terminal and at least one first and one second output terminal, the first input terminal (RX) and the first output terminal (TX) being arranged to be connected to reception and transmission channels of the telephone exchange, respectively; a signal generating circuit (C) in which an impedance generating circuit (ZAC) for matching telephone signals to the subscriber telephone line is incorporated in the signal path, having at least one first and one second input terminal and at least one first and one second output terminal, the first input terminal and the first output terminal being connected to the second output terminal and the second input terminal, respectively, of the reception and transmission circuit (RX/TX); a circuit (S) for powering and inputting signals to the subscriber telephone line having at least one input terminal and a first output terminal and also having two terminals for connection to the subscriber telephone line, the input terminal being connected to the second output terminal of the signal generating circuit (C); first current mirroring circuit means (CM) aranged between the first output terminal of the circuit (S) for powering and inputting signals to the subscriber telephone line and the second input terminal of signal generating circuit (C), the first current mirroring circuit means being arranged to be connected to the subscriber telephone line via the circuit (S) for powering and inputting signals to the subscriber telephone line and being connected to a point in the path of the signals in the signal generating circuit (C) via the impedance generating circuit (ZAC), the first current mirroring circuit means (CM) being arranged to provide a current (KI_{LAC}) proportional to the signal component of the instantaneous current present in the subscriber telephone line in accordance with a predetermined proportionality ratio (K) to the signal generating circuit (C) as a counter response; and a source (TTX) of control signals for a charging indication device which can be connected to the subscriber telephone line, the source of control signals being connected to the first input terminal of the circuit (S) for powering and inputting signals to the subscriber telephone line, characterised in that the source (TTX) of control signals is connected to the second terminal of the signal generating circuit (C) by means of second circuit means (Z_{T}) arranged to offer an impedance proportional to the subscriber telephone line impedance substantially in accordance with the predetermined proportionality ratio (K) to the said source (TTX) of control signals, the direction of current flowing from the second circuit means (Z_{T}) to the second input terminal of the signal generating circuit (C) being opposite that of the current flowing in the second input terminal of the signal generating circuit (C) from the first current mirroring circuit means (CM).

2. A telephone device according to Claim 1, characterised in that the second circuit means includes a resistance and a capacitance in series with each other and the source (TTX) of control signals provides voltage signals.

## Patentansprüche

1. Telefonschnittstellenschaltung zur Verwendung zwischen einer Teilnehmertelefonleitung und Steuereinheiten in einer Telefonvermittlungsstelle, umfassend:
eine Empfangs- und Übertragungsschaltung (RX/TX) mit wenigstens einem ersten und einem zweiten Eingangsanschluß und mit wenigstens einem ersten und einem zweiten Ausgangsanschluß, wobei der erste Eingangsanschluß (RX) und der erste Ausgangsanschluß (TX) angeordnet sind, um mit Empfangs- bzw. Übertragungskanälen der Telefonvermittlungsstelle verbunden zu werden;
eine Signalerzeugungsschaltung (C), in der eine Impedanzerzeugungsschaltung (ZAC) zur Anpassung von Telefonsignalen an die Teilnehmertelefonleitung in den Signalpfad eingebaut ist, mit wenigstens einem ersten und einem zweiten Eingangsanschluß und mit wenigstens einem ersten und einem zweiten Ausgangsanschluß, wobei der erste Eingangsanschluß und der erste Ausgangsanschluß mit dem zweiten Ausgangsanschluß bzw. dem zweiten Eingangsanschluß der Empfangs- und Übertragungsschaltung (RX/TX) verbunden ist;
eine Schaltung (S) zur Energieversorgung und zum Eingeben von Signalen der/an die Teilnehmertelefonleitung mit wenigstens einem Eingangsanschluß und einem ersten Ausgangsanschluß und ferner mit zwei Anschlüssen zur Verbindung mit der Teilnehmertelefonleitung, wobei der Eingangsanschluß mit dem zweiten Ausgangsanschluß der Signalerzeugungsschaltung (C) verbunden ist;
eine erste Stromspiegelungs-Schaltungseinrichtung (CM), die zwischen den ersten Ausgangsanschluß der Schaltung (S) zur Energieversorgung und zum Eingeben von Signalen der/an die Teilnehmertelefonleitung und dem zweiten Eingangsanschluß der Signalerzeugungsschaltung (C) angeordnet ist, wobei die erste Stromspiegelungs-Schaltungseinrichtung angeordnet ist, um über die Schaltung (S) zur Energieversorgung und zum Eingeben von Signalen der/an die Teilnehmertelefonleitung mit der Teilnehmertelefonleitung verbunden zu werden, und mit einem Punkt in dem Pfad der Signale in der Signalerzeugungsschaltung (C) über die Impedanzerzeugungsschaltung (ZAC) verbunden ist, wobei die erste Stromspiegelungs-Schaltungseinrichtung (CM) angeordnet ist, um als eine Zählerantwort an der Signalerzeugungsschaltung (C) gemäß einem vorgegebenen Proportionalitätsverhältnis (K) einen Strom (KI_{LAC}) bereitzustellen, der proportional zu der Signalkomponente des momentanen Stroms ist, der in der Teilnehmertelefonleitung vorhanden ist; und
eine Quelle (TTX) von Steuersignalen für eine Abrechnungsanzeigeeinrichtung, die mit der Teilnehmertelefonleitung verbunden werden kann, wobei die Quelle von Steuersignalen mit dem ersten Eingangsanschluß der Schaltung (S) zur Energieversorgung und zur Eingabe von Signalen der/an die Teilnehmertelefonleitung verbunden ist,
dadurch **gekennzeichnet** , daß
die Quelle (TTX) von Steuersignalen mit dem zweiten Anschluß der Signalerzeugungsschaltung (C) mittels einer zweiten Schaltungseinrichtung (Z_{T}) verbunden ist, die angeordnet ist, um der Quelle (TTX) von Steuersignalen eine Impedanz anzubieten, die im wesentlichen gemäß dem vorgegebenen Proportionalitätsverhältnis (K) zu der Teilnehmertelefonleitung proportional ist, wobei die Richtung des von der zweiten Schaltungseinrichtung (Z_{T}) an den zweiten Eingangsanschluß der Signalerzeugungsschaltung (C) fließenden Stroms entgegengesetzt zu derjenigen des Stroms ist, der in den zweiten Eingangsanschluß der Signalerzeugungsschaltung (C) von der ersten Stromspiegelungs-Schaltungseinrichtung (CM) fließt.

2. Telefoneinrichtung nach Anspruch 1,
dadurch **gekennzeichnet** , daß die zweite Schaltungseinrichtung einen Widerstand und eine Kapazität in Reihe zueinander umfassen und die Quelle (TTX) von Steuersignalen Spannungssignale bereitstellt.

## Revendications

1. Un circuit d'interface téléphonique destiné à être utilisé entre une ligne téléphonique d'abonné et unités de commande dans un central téléphonique, comprenant:
un circuit de réception et de transmission (RX/TX) possédant au moins un premier et un deuxième terminal d'entrée et au moins un premier et un deuxième terminal de sortie, le premier terminal d'entrée (RX) et le premier terminal de sortie (TX) étant aménagés de manière à pouvoir être connectés aux canaux de réception et aux canaux de transmission du central téléphonique respectivement;
un circuit générateur de signaux (C) dans lequel un circuit générateur d'impédance (ZAC) pour adapter les signaux téléphoniques à la ligne téléphonique d'abonné. est incorporé dans le chemin des signaux. et dans lequel il y a au moins un premier et un deuxième terminal d'entrée et au moins un premier et un deuxième terminal de sortie, le premier terminal d'entrée et le premier terminal de sortie étant connectés au deuxième terminal de sortie et au deuxième terminal d'entrée, respectivement, du circuit de réception et du circuit d'émission (RX/TX):
un circuit (S) pour engendrer et introduire des signaux dans la ligne téléphonique d'abonné ayant au moins un terminal d'entrée et un premier terminal de sortie et ayant également deux terminaux pour la connexion à la ligne téléphonique d'abonné, le terminal d'entrée étant connecté au deuxième terminal de sortie du circuit générateur de signaux (C);
un premier moyen de circuit du type miroir de courant (CM) implanté entre le premier terminal de sortie du circuit (S) pour engendrer et introduire des signaux dans la ligne téléphonique d'abonné et le deuxième terminal d'entrée du circuit générateur de signaux (C), le premier circuit à miroir de courant étant arrangé pour être connecté à la ligne téléphonique d'abonné par l'intermédiaire du circuit (S) pour engendrer et introduire des signaux dans la ligne téléphonique d'abonné et pour être connecté à un point du chemin des signaux dans le circuit générateur de signaux (C) par l'intermédiaire du circuit générateur d'impédance (ZAC), le premier circuit du type miroir de courant (CM) étant aménagé pour fournir un courant (KI_{LAC}) proportionnel à la composante de signal du courant instantané présent dans la ligne téléphonique d'abonné en accord avec un rapport de proportionnalité prédéterminé (K) au circuit générateur de signaux (C) en tant que contre-réponse; et
une source (TTX) de signaux de commande pour un dispositif d'indication de taxation qui peut être connectée à la ligne téléphonique d'abonné, la source de signaux de commande étant connectée au premier terminal d'entrée du circuit (S) pour engendrer et introduire des signaux dans la ligne téléphonique d'abonné,
caractérisé en ce que la source (TTX) de signaux de commande est connectée au deuxième terminal du circuit de génération de signaux (C) au moyen d'un deuxième moyen de circuit (Z_{T}) arrangé pour offrir une impédance proportionnelle à l'impédance de la ligne téléphonique d'abonné essentiellement en conformité avec le rapport de proportionnalité prédéterminé (K) à ladite source (TTX) des signaux de commande, la direction du courant allant du deuxième moyen de circuit (Z_{T}) vers le deuxième terminal d'entrée du circuit générateur de signaux (C) étant opposée à celle du courant allant vers le deuxième terminal d'entrée du circuit générateur de signaux (C) à partir du premier moyen de circuit du type miroir de courant (CM).

2. Dispositif téléphonique selon revendication 1, caractérisé en ce que le deuxième moyen de circuit inclut une résistance et une capacité en série l'une par rapport à l'autre et que la source (TTX) de signaux de commande fournit des signaux de tension.
